# EUROPÄISCHE PATENTSCHRIFT

(11) **EP 2 458 291 B1**
(45) Veröffentlichungstag und Bekanntmachung des Hinweises auf die Patenterteilung: **19.10.2016**
(21) Anmeldenummer: 11172472.0
(22) Anmeldetag: 04.07.2011
(51) Int. Cl.: F24D 17/00, F24D 19/10, G05D 23/19

(54) **Verfahren zum Ansteuern einer Zirkulationspumpe und dessen Anordnung**
Method for actuating a circulating pump and its arrangement
Procédé destiné à la commande d'une pompe de circulation et son agencement

(30) Priorität: 08.07.2010 DE 102010026515
(43) Veröffentlichungstag der Anmeldung: 30.05.2012
(73) Patentinhaber: Robert Bosch GmbH, 70442 Stuttgart (DE)
(72) Erfinder: Cramer, Thorsten, 35447 Reiskirchen (DE); Payer, Hartmut, 35274 Kirchhain (DE)

(56) Entgegenhaltungen:
- DE-A1- 10 061 971
- DE-A1- 19 516 941
- DE-B3-102006 018 271

## Beschreibung

Die Erfindung betrifft ein Verfahren zum Ansteuern einer Zirkulationspumpe nach dem Oberbegriff des Patentanspruches 1.

Zirkulationsleitungen stellen die Verbindung der Warmwasserentnahmeleitung zurück zum Speicher dar. Der somit entstandene geschlossene Kreislauf hat die Aufgabe, immer Warmwasser in den Leitungen zu führen, damit bei jedem Zapfvorgang möglichst schnell auch warmes Wasser gezapft werden kann. Ohne Zirkulationsleitung müsste erst das abgekühlte Wasser abfließen, bevor warmes verfügbar ist. Besonders für größere Anlagen, wie zum Beispiel Mehrfamilienwohnhäuser oder Hotels, aber auch für Einfamilienhäuser mit relativ langen Warmwasserleitungen bis zu den Zapfstellen, sind Zirkulationsleitungen unverzichtbar. Sie verbessern den Warmwasserkomfort, reduzieren den Wasserverbrauch und ermöglichen eine thermische Desinfektion auch im Rohrnetz.

Üblicherweise wird die aktuelle Warmwassertemperatur mit einem Temperaturfühler im oberen Bereich des Warmwasserspeichers erfasst und der Sollwert für die Warmwassertemperatur im oberen Bereich des Warmwasserspeichers am Regler eines Heizgerätes eingegeben. Er entspricht einer Ausschalttemperatur, die über eine Schalthysterese mit einer Einschalttemperatur, d. h. dem Beginn der Nachladung, in Zusammenhang steht.

Für einen günstigen Wirkungsgrad einer Heizungsanlage ist unter anderem auch wichtig, dass einerseits ein ausreichender Warmwasserkomfort zur Verfügung steht und andererseits der Warmwasserspeicher aber nur bei tatsächlichem Warmwasserbedarf aufgeheizt wird, um Auskühlungs- bzw. Bereitschaftsverluste möglichst klein zu halten.

Eine Zirkulationspumpe wird üblicherweise in vorgegebenen und/oder am Regler einstellbaren Zeitintervallen in Betrieb gesetzt. Es ist bekannt, die Freigabe der Warmwasserbereitung an die eingestellten Heizzeiten für angeschlossene Heizkreise zu koppeln oder wahlweise mindestens einen an einem Regler einzugebenden Zeitraum für die Freigabe der Nachladung des Warmwasserspeichers vorzusehen. Dann läuft die Zirkulationspumpe nur im Zeitraum der Freigabe. Ist dieser Zeitraum sehr großzügig bemessen und weicht er deutlich vom tatsächlichen Warmwasserbedarf und dem Entnahmeverhalten ab, so treten Energieverluste auf. Die Ursache liegt im Wesentlichen im Durchmischen des Warmwasserspeichers durch einströmendes, kühleres Wasser aus der Zirkulation und einer möglicherweise unnötig ausgelösten Nachladung, weil ein Temperaturgrenzwert dafür im Warmwasserspeicher unterschritten wurde. Dann wird jeweils ein unnötiger Brennerstart mit entsprechendem Energieverbrauch verursacht und das Temperaturniveau im Warmwasserspeicher wieder angehoben, obwohl möglicherweise keine Zapfung folgt.

Aus der DE 100 61 971 A1 geht eine Steuereinrichtung für Zirkulationspumpen in Brauchwasserbereitungsanlagen hervor, welche die Pumpe in Abhängigkeit von der Temperaturdifferenz zwischen Vor- und Rücklaufleitung steuert.

Aus der deutschen Patentschrift DE 10 2006 018 271 B3 ist ein Verfahren zum Ansteuern einer Zirkulationspumpe in einer Verbindungsleitung zwischen einer Zapfstelle an einer Warmwasserentnahmeleitung und einem Warmwasserspeicher bekannt, mit einem Temperaturfühler im oberen Bereich des Warmwasserspeichers zur Erfassung der Warmwassertemperatur, einem an einem Regler einzugebenden Sollwert für die Warmwassertemperatur im oberen Bereich des Warmwasserspeichers, unterhalb der eine Nachladung erfolgt, sowie einer an einem Regler einzugebenden, mit dem Sollwert gekoppelten Schalthysterese für den Beginn der Nachladung. Zudem geht aus dieser Patentschrift hervor, dass die Aufgabe zugrunde liegt, den Wirkungsgrad einer Heizungsanlage zu optimieren und die Durchmischung eines Warmwasserspeichers durch den Betrieb einer Zirkulationspumpe in Zeiten ohne Warmwasserentnahme zu vermindern. Das Verfahren offenbart weiterhin, dass ein weiterer Temperaturfühler für die Warmwassertemperatur in der Warmwasserentnahmeleitung mit Abstand zum Warmwasserspeicher in der Warmwasserentnahmeleitung angeordnet ist, dass ein Vergleich der Messwerte der beiden Temperaturfühler erfolgt und dass die Zirkulationspumpe beim Erreichen und/oder Überschreiten eines vorzugebenden Schwellwertes für die Temperaturdifferenz in Betrieb gesetzt wird.

Der Erfindung liegt daher die Aufgabe zugrunde, den Wirkungsgrad einer Heizungsanlage zu optimieren und die Durchmischung eines Warmwasserspeichers durch den Betrieb einer Zirkulationspumpe in Zeiten ohne Warmwasserentnahme zu vermindern.

Erfindungsgemäß wird dies mit den Merkmalen des Patentanspruches 1 gelöst. Vorteilhafte Weiterbildungen sind den Unteransprüchen zu entnehmen.

Das Verfahren zum Ansteuern einer Zirkulationspumpe ist dadurch gekennzeichnet, dass der weitere Temperaturfühler zur Erfassung der Warmwassertemperatur in der Verbindungsleitung angeordnet ist, welche eine Zapfstelle an einer Warmwasserentnahmeleitung und einen Warmwasserspeicher verbindet. Dabei ist der weitere Temperaturfühler für die Warmwassertemperatur in der Verbindungsleitung mit Abstand zum Warmwasserspeicher in der Verbindungsleitung angeordnet. Es erfolgt ein Vergleich der Messwerte der beiden Temperaturfühler und die Zirkulationspumpe wird dann beim Erreichen und/oder Überschreiten eines vorzugebenden Schwellwertes für die Temperaturdifferenz in Betrieb gesetzt.

Die Zirkulationspumpe wird in einer ersten Ausführungsvariante beim Erreichen und/oder Unterschreiten eines Schwellwertes für die Temperaturdifferenz wieder abgeschaltet. In einer weiteren Ausführungsvariante wird sie ab dem Erreichen und/oder Überschreiten eines Schwellwertes für die Temperaturdifferenz für einen vorzugebenden Zeitraum in Betrieb gesetzt, weil oftmals schon kurzzeitiges Umwälzen des Warmwasservolumens, beispielsweise für wenige Minuten, ausreicht.

Generell wird ein Vergleich der Messwerte der beiden Temperaturfühler nur in Zeiträumen durchgeführt, in denen am Regler über einen programmierbaren Zeitkanal die Warmwasserbereitung freigegeben ist. In der übrigen Zeit geht man davon aus, dass kein Warmwasserbedarf ansteht bzw. dass dann im Einzelfall Komforteinschränkungen durch Abzapfen von kühlerem Wasser in Kauf genommen werden.

Zur Durchführung des Verfahrens ist es wichtig, dass der zusätzliche Temperaturfühler für die Warmwassertemperatur in der Verbindungsleitung mit Abstand zum Warmwasserspeicher in der Verbindungsleitung angeordnet ist, um direkte Wärmeleitung zu vermeiden Vorzugsweise sollte daher der Abstand zwischen Temperaturfühler und Warmwasserspeicher mindestens 30 cm betragen. Vorteilhaft ist es außerdem, wenn der weitere Temperaturfühler für die Warmwassertemperatur in der Verbindungsleitung in Strömungsrichtung vor der Zirkulationspumpe eingebaut ist.

Mit der Erfindung steht ein einfaches Verfahren zum Ansteuern einer Zirkulationspumpe zur Verfügung, mit dem der Wirkungsgrad einer Heizungsanlage optimiert und eine Durchmischung eines Warmwasserspeichers durch den Betrieb einer Zirkulationspumpe in Zeiten ohne Warmwasserentnahme vermindert wird.

Es werden durch die bedarfsabhängige, auf die tatsächlichen Temperaturverhältnisse und den aktuellen Warmwasserbedarf eines Anlagennutzers angepasste Ansteuerung der Zirkulationspumpe der gewünschte Warmwasserkomfort sichergestellt, Auskühlverluste von Rohrnetz und Warmwasserspeicher verringert, unnötige Brennerstarts vermieden, längere Brennerlaufzeiten erreicht, der Stromverbrauch der Pumpe reduziert und der Verschleiß an elektromechanischen Bauteilen der Regelung verringert.

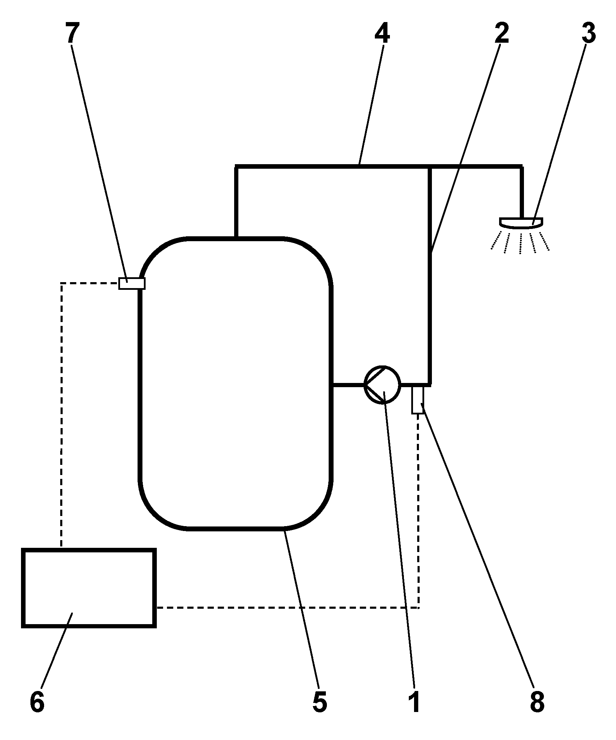

Die Zeichnung stellt ein Ausführungsbeispiel der Erfindung dar und zeigt in einer einzigen Figur eine Anordnung zur Warmwasserbereitung.

Die Zirkulationspumpe 1 befindet sich in einer Verbindungsleitung 2 zwischen einer Zapfstelle 3 an einer Warmwasserentnahmeleitung 4 und einem Warmwasserspeicher 5.

Mit einem Regler 6 ist ein Temperaturfühler 7 im oberen Bereich des Warmwasserspeichers 5 zur Erfassung der Warmwassertemperatur sowie ein weiterer Temperaturfühler 8 zur Erfassung der Warmwassertemperatur in der Verbindungsleitung 2 gekoppelt. Dabei ist der Temperaturfühler 8 mit Abstand zum Warmwasserspeicher in der Verbindungsleitung 2 und stromaufwärts der Zirkulationspumpe 1 angeordnet.

Durch Auswertung der Messwerte der beiden Temperaturfühler 7, 8 wird die Zirkulationspumpe 1 entsprechend angesteuert.

## Patentansprüche

1. Verfahren zum Ansteuern einer Zirkulationspumpe (1) in einer Verbindungsleitung (2) zwischen einer Zapfstelle (3) an einer Warmwasserentnahmeleitung (4) und einem Warmwasserspeicher (5), mit einem Temperaturfühler (7) im oberen Bereich des Warmwasserspeichers (5) zur Erfassung der Warmwassertemperatur, einem an einem Regler (6) einzugebenden Sollwert für die Warmwassertemperatur im oberen Bereich des Warmwasserspeichers (5), unterhalb der eine Nachladung erfolgt, sowie einer an einem Regler (6) einzugebenden, mit dem Sollwert gekoppelten Schalthysterese für den Beginn der Nachladung, und mit einem weiteren Temperaturfühler (8) für die Warmwassertemperatur, wobei ein Vergleich der Messwerte der beiden Temperaturfühler (7, 8) erfolgt und wobei die Zirkulationspumpe (1) beim Erreichen und/oder Überschreiten eines vorzugebenden Schwellwertes für die Temperaturdifferenz in Betrieb gesetzt wird,
**dadurch gekennzeichnet, dass** der weitere Temperaturfühler (8) für die Warmwassertemperatur in der Verbindungsleitung (2) angeordnet ist, wobei der weitere Temperaturfühler (8) für die Warmwassertemperatur in der Verbindungsleitung (2) mit Abstand zum Warmwasserspeicher (5) in der Verbindungsleitung (2) angeordnet ist.

2. Verfahren nach Anspruch 1,
**dadurch gekennzeichnet, dass** die Zirkulationspumpe (1) beim Erreichen und/oder Unterschreiten eines Schwellwertes für die Temperaturdifferenz abgeschaltet wird.

3. Verfahren nach den Ansprüchen 1 oder 2,
**dadurch gekennzeichnet, dass** die Zirkulationspumpe (1) beim Erreichen und/oder Überschreiten eines Schwellwertes für die Temperaturdifferenz für einen vorzugebenden Zeitraum in Betrieb gesetzt wird.

4. Verfahren nach einem der Ansprüche 1 bis 3,
**dadurch gekennzeichnet, dass** ein Vergleich der Messwerte der beiden Temperaturfühler (7, 8) nur in Zeiträumen mit am Regler (6) über einen programmierbaren Zeitkanal freigegebener Warmwasserbereitung erfolgt.

5. Anordnung zur Durchführung des Verfahrens nach den Ansprüchen 1 bis 4, mit einem Warmwasserspeicher(5), einem Temperaturfühler (7) im oberen Bereich des Warmwasserspeichers (5) zur Erfassung der Warmwassertemperatur, einem an einem Regler (6) einzugebenden Sollwert für die Warmwassertemperatur im oberen Bereich des Warmwasserspeichers (5), unterhalb der eine Nachladung erfolgt, sowie einer an einem Regler (6) einzugebenden, mit dem Sollwert gekoppelten Schalthysterese für den Beginn der Nachladung, und mit einem weiteren Temperaturfühler (8) für die Warmwassertemperatur, wobei ein Vergleich der Messwerte der beiden Temperaturfühler (7, 8) erfolgt und wobei die Zirkulationspumpe (1) beim Erreichen und/oder Überschreiten eines vorzugebenden Schwellwertes für die Temperaturdifferenz in Betrieb gesetzt wird,
**dadurch gekennzeichnet, dass** der weitere Temperaturfühler (8) für die Warmwassertemperatur in der Verbindungsleitung (2) mit Abstand zum Warmwasserspeicher (5) in der Verbindungsleitung (2) angeordnet ist.

6. Anordnung zur Durchführung des Verfahrens nach Anspruch 5,
**dadurch gekennzeichnet, dass** der weitere Temperaturfühler (8) für die Warmwassertemperatur in der Verbindungsleitung (2) in Strömungsrichtung vor der Zirkulationspumpe (1) eingebaut ist.

## Claims

1. Method for actuating a circulation pump (1) in a connecting line (2) between a tapping point (3) on a hot water removal line (4) and a hot water tank (5), having a temperature sensor (7) in the upper region of the hot water tank (5) for detecting the hot water temperature, a setpoint value to be input at a controller (6) for the hot water temperature in the upper region of the hot water tank (5), below which setpoint value a refilling operation takes place, and a switching hysteresis which is to be input at a controller (6) and is coupled to the setpoint value for the start of the refilling operation, and having a further temperature sensor (8) for the hot water temperature, a comparison of the measured values of the two temperature sensors (7, 8) taking place, and the circulation pump (1) being set in operation when a threshold value to be predefined for the temperature difference is reached and/or exceeded, **characterized in that** the further temperature sensor (8) for the hot water temperature is arranged in the connecting line (2), the further temperature sensor (8) for the hot water temperature in the connecting line (2) being arranged at a spacing from the hot water tank (5) in the connecting line (2).

2. Method according to Claim 1, **characterized in that** the circulation pump (1) is switched off when a threshold value for the temperature difference is reached and/or undershot.

3. Method according to Claim 1 or 2, **characterized in that** the circulation pump (1) is set in operation when a threshold value for the temperature difference is reached and/or exceeded for a time period to be predefined.

4. Method according to one of Claims 1 to 3, **characterized in that** a comparison of the measured values of the two temperature sensors (7, 8) takes place only in time periods with hot water heating which is enabled at the controller (6) via a programmable time channel.

5. Arrangement for carrying out the method according to Claims 1 to 4, having a hot water tank (5), a temperature sensor (7) in the upper region of the hot water tank (5) for detecting the hot water temperature, a setpoint value to be input at a controller (6) for the hot water temperature in the upper region of the hot water tank (5), below which setpoint value a refilling operation takes place, and a switching hysteresis which is to be input at a controller (6) and is coupled to the setpoint value for the start of the refilling operation, and having a further temperature sensor (8) for the hot water temperature, a comparison of the measured values of the two temperature sensors (7, 8) taking place, and the circulation pump (1) being set in operation when a threshold value to be predefined for the temperature difference is reached and/or exceeded, **characterized in that** the further temperature sensor (8) for the hot water temperature in the connecting line (2) is arranged at a spacing from the hot water tank (5) in the connecting line (2).

6. Arrangement for carrying out the method according to Claim 5, **characterized in that** the further temperature sensor (8) for the hot water temperature in the connecting line (2) is installed upstream of the circulation pump (1) in the flow direction.

## Revendications

1. Procédé pour commander une pompe de circulation (1) dans une conduite de raccordement (2) entre un point de prélèvement (3) au niveau d'une conduite de prélèvement d'eau chaude (4) et un accumulateur d'eau chaude (5), comprenant un capteur de température (7) dans la région supérieure de l'accumulateur d'eau chaude (5) pour détecter la température de l'eau chaude, une valeur de consigne pour la température de l'eau chaude devant être entrée au niveau d'un régulateur (6) dans la région supérieure de l'accumulateur d'eau chaude (5), en dessous de laquelle se produit une recharge, ainsi qu'une hystérésis de commutation devant être entrée au niveau d'un régulateur (6), accouplée à la valeur de consigne pour le début de la recharge, et un capteur de température supplémentaire (8) pour la température de l'eau chaude, une comparaison des valeurs de mesure des deux capteurs de température (7, 8) ayant lieu et la pompe de circulation (1) étant mise en fonctionnement une fois atteinte et/ou dépassée une valeur seuil à prédéfinir pour la différence de température,
**caractérisé en ce que** le capteur de température supplémentaire (8) pour la température de l'eau chaude est disposé dans la conduite de raccordement (2), le capteur de température supplémentaire (8) pour la température de l'eau chaude dans la conduite de raccordement (2) étant disposé à distance de l'accumulateur d'eau chaude (5) dans la conduite de raccordement (2).

2. Procédé selon la revendication 1,
**caractérisé en ce que** la pompe de circulation (1) est coupée en dessous d'une valeur seuil pour la différence de température et/ou à l'obtention de celle-ci.

3. Procédé selon les revendications 1 ou 2,
**caractérisé en ce que** la pompe de circulation (1) est mise en fonctionnement une fois atteinte et/ou dépassée une valeur seuil pour la différence de température pendant un intervalle de temps à prédéfinir.

4. Procédé selon l'une quelconque des revendications 1 à 3, **caractérisé en ce qu'**une comparaison des valeurs de mesure des deux capteurs de température (7, 8) s'effectue seulement dans des intervalles de temps avec fourniture d'eau chaude libérée au niveau du régulateur (6) par le biais d'un canal de temporisation programmable.

5. Agencement pour mettre en oeuvre le procédé selon les revendications 1 à 4, comprenant un accumulateur d'eau chaude (5), un capteur de température (7) dans la région supérieure de l'accumulateur d'eau chaude (5) pour détecter la température de l'eau chaude, une valeur de consigne pour la température de l'eau chaude devant être entrée au niveau d'un régulateur (6) dans la région supérieure de l'accumulateur d'eau chaude (5), en dessous de laquelle une recharge a lieu, ainsi qu'une hystérésis de commutation devant être entrée au niveau d'un régulateur (6), accouplée à la valeur de consigne, pour le commencement de la recharge, et avec un capteur de température supplémentaire (8) pour la température de l'eau chaude, une comparaison des valeurs de mesure des deux capteurs de température (7, 8) ayant lieu et la pompe de circulation (1), une fois atteinte et/ou dépassée une valeur seuil à prédéfinir pour la différence de température, étant mise en fonctionnement,
**caractérisé en ce que** le capteur de température supplémentaire (8) pour la température de l'eau chaude dans la conduite de raccordement (2) est disposé à distance de l'accumulateur d'eau chaude (5) dans la conduite de raccordement (2).

6. Agencement pour mettre en oeuvre le procédé selon la revendication 5, **caractérisé en ce que** le capteur de température supplémentaire (8) pour la température de l'eau chaude dans la conduite de raccordement (2) est incorporé dans la direction d'écoulement avant la pompe de circulation (1).
